(19) Europäisches Patentamt
European Patent Office
Office européen des brevets

(11) **EP 3 121 872 A1**

(12) **EUROPEAN PATENT APPLICATION**
published in accordance with Art. 153(4) EPC

(43) Date of publication:
**25.01.2017  Bulletin 2017/04**

(21) Application number: **15765239.7**

(22) Date of filing: **05.03.2015**

(51) Int Cl.:
**H01M 2/16** (2006.01)     **B32B 5/18** (2006.01)
**B32B 27/30** (2006.01)     **C08J 9/00** (2006.01)

(86) International application number:
**PCT/JP2015/056473**

(87) International publication number:
**WO 2015/141477 (24.09.2015 Gazette 2015/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority:  **18.03.2014   JP 2014055478**

(71) Applicant: **Sekisui Chemical Co., Ltd.
Osaka-shi, Osaka 530-8565 (JP)**

(72) Inventors:
 • **NAKADATE, Junichi
  Mishima-gun,
  Osaka 618-0021 (JP)**

 • **SAWADA, Takahiko
  Mishima-gun
  Osaka 618-0021 (JP)**
 • **TADA, Hiroshi
  Mishima-gun
  Osaka 618-0021 (JP)**
 • **SAKURAI, Yuki
  Mishima-gun
  Osaka 618-0021 (JP)**
 • **CHO, Taehyung
  Mishima-gun
  Osaka 618-0021 (JP)**

(74) Representative: **Ter Meer Steinmeister & Partner
Patentanwälte mbB
Nymphenburger Straße 4
80335 München (DE)**

(54) **HEAT RESISTANT SYNTHETIC RESIN MICROPOROUS FILM, METHOD FOR MANUFACTURING SAME, NONAQUEOUS ELECTROLYTE SECONDARY CELL SEPARATOR, AND NONAQUEOUS ELECTROLYTE SECONDARY CELL**

(57)     Provided are a heat-resistant synthetic resin microporous film having enhanced heat resistance while having reduced deterioration of mechanical strength, and a method for producing the same. Disclosed is a heat-resistant synthetic resin microporous film which includes a synthetic resin microporous film containing a synthetic resin; and a coating layer formed on at least a portion of the surface of the synthetic resin microporous film and containing a polymer of a polymerizable compound having a bifunctional or higher-functional radical polymerizable functional group, the heat-resistant synthetic resin microporous film having a surface aperture ratio of 30% to 55%, gas permeability of 50 sec/100 mL to 600 sec/100 mL, a maximum thermal shrinkage obtainable when the film is heated from 25°C to 180°C at a rate of temperature increase of 5°C/min, of 20% or less, and a piercing strength of 0.7 N or more.

EP 3 121 872 A1

**Description**

Technical Field

The present invention relates to a heat-resistant synthetic resin microporous film, a separator for a non-aqueous liquid electrolyte secondary battery, a non-aqueous liquid electrolyte secondary battery, and a method for producing a heat-resistant synthetic resin microporous film.

Background Art

Lithium ion secondary batteries have been traditionally used as power supplies for portable electronic equipment. Each of these lithium ion secondary batteries is generally constructed by providing a positive electrode, a negative electrode, and a separator in a liquid electrolyte. The positive electrode is formed by applying lithium cobaltate or lithium manganate on the surface of an aluminum foil. The negative electrode is formed by applying carbon on the surface of a copper foil. The separator is provided to separate the positive electrode and the negative electrode, and prevents electrical short circuits between the electrodes.

At the time of charging a lithium ion secondary battery, lithium ions are released from the positive electrode and move into the negative electrode. On the other hand, at the time of discharging a lithium ion secondary battery, lithium ions are released from the negative electrode and move to the positive electrode. Accordingly, the separator is required to have excellent ion permeability for lithium ions and the like.

For the separator, synthetic resin microporous films are used in view of having excellent insulating properties and cost performance. A synthetic resin microporous film contains a synthetic resin such as a propylene-based resin. Further, a synthetic resin microporous film is produced by stretching a synthetic resin film.

In a synthetic resin microporous film produced by a stretching method, high residual stress caused by stretching occurs. Therefore, such a synthetic resin microporous film undergoes thermal contraction at a high temperature, and as a result, a possibility that the positive electrode and the negative electrode may be short-circuited has been pointed out. Therefore, it is desirable to ensure safety of the lithium ion secondary battery by enhancing the heat resistance of the synthetic resin microporous film.

Thus, Patent Literature 1 discloses that irradiation of an electron beam can reduce thermal contraction of a synthetic resin microporous film and can enhance heat resistance thereof.

Citation List

Patent Literature

[PTL 1] JP-A-2003-22793

Summary of Invention

Technical Problem

However, heat resistance of synthetic resin microporous films could not be sufficiently enhanced by only a treatment based on the irradiation of an electron beam.

Furthermore, with the treatment based on the irradiation of an electron beam only, the synthetic resin microporous film becomes brittle, mechanical strength such as piercing strength is decreased, and the synthetic resin microporous film is easily broken by slight impacts. Such a synthetic resin microporous film is easily torn off due to the dendrites (dendritic crystals) generated on the surface of the negative electrode along with repeated charging and discharging, and electrical short circuits between the electrodes easily occur. Furthermore, in a synthetic resin microporous film having deteriorated mechanical strength, breakage or tearing may easily occur at the time of the production of a separator or at the time of battery assembling.

Therefore, it is an object of the invention to provide a heat-resistant synthetic resin microporous film having enhanced heat resistance while having reduced deterioration of mechanical strength and a method for producing the same. Furthermore, it is another object of the invention to provide a separator for a non-aqueous liquid electrolyte secondary battery using the heat-resistant synthetic resin microporous film, and a non-aqueous liquid electrolyte secondary battery.

Solution to Problem

According to an aspect of the invention, there is provided a heat-resistant synthetic resin microporous film including:

a synthetic resin microporous film containing a synthetic resin; and
a coating layer formed on at least a portion of the surface of the synthetic resin microporous film and containing a polymer of a polymerizable compound having a bifunctional or higher-functional radical polymerizable functional group,
the heat-resistant synthetic resin microporous film having a surface aperture ratio of 30% to 55%; gas permeability of 50 sec/100 mL to 600 sec/100 mL; a maximum thermal shrinkage obtainable when the film is heated from 25°C to 180°C at a rate of temperature increase of 5°C/min, of 20% or less; and a piercing strength of 0.7 N or more.

According to another aspect of the invention, there is provided a heat-resistant synthetic resin microporous film including:

a synthetic resin microporous film containing a synthetic resin; and
a coating layer formed on at least a portion of the surface of the synthetic resin microporous film and containing a polymer of a polymerizable compound having a bifunctional or higher-functional radical polymerizable functional group, with the polymerizable compound being at least one selected from the group consisting of a polyfunctional (meth)acrylate modification product, a dendritic polymer having bifunctional or higher-functional (meth)acryloyl groups, and a urethane (meth)acrylate oligomer having a bifunctional or higher-functional (meth)acryloyl group,
the heat-resistant synthetic resin microporous film having a surface aperture ratio of 30% to 55%; gas permeability of 50 sec/100 mL to 600 sec/100 mL; and a maximum thermal shrinkage obtainable when the film is heated from 25°C to 180°C at a rate of temperature increase of 5°C/min, of 20% or less.

[Synthetic resin microporous film]

Regarding the synthetic resin microporous film used in the invention, any microporous film that is used as a separator in conventional non-aqueous liquid electrolyte secondary batteries can be used without any particular limitations. The synthetic resin microporous film is preferably an olefin-based resin microporous film. An olefin-based resin microporous film is susceptible to deformation or thermal contraction at a high temperature. On the other hand, when the coating layer of the heat-resistant synthetic resin microporous film of the invention is used, excellent heat resistance can be imparted to the olefin-based resin microporous film, as will be described below. Therefore, the effect of the invention can be further effectively manifested by integrally forming a coating layer on the olefin-based resin microporous film.

An olefin-based resin microporous film contains an olefin-based resin. The olefin-based resin is preferably an ethylene-based resin or a propylene-based resin, and more preferably a propylene-based resin. It is preferable that the olefin-based resin microporous film contains 50% by weight or more, more preferably 70% by weight or more, and particularly preferably 90% by weight or more, of the olefin-based resin.

Examples of the propylene-based resin include homopolypropylene, and copolymers of propylene and other olefins. In a case in which the synthetic resin microporous film is produced by the stretching method described below, homopolypropylene is preferred. The propylene-based resin may be used singly, or two or more kinds thereof may be used in combination. Furthermore, a copolymer of propylene and other olefin may be any of a block copolymer or a random copolymer.

Examples of the olefin that is copolymerized with propylene include α-olefins such as ethylene, 1-butene, 1-pentene, 4-methyl-1-penten 1-hexene, 1-octene, 1-nonene, and 1-decene, and ethylene is preferred.

The weight average molecular weight of the olefin-based resin is preferably 250,000 to 500,000, and more preferably 280,000 to 480,000. When an olefin-based resin having a weight average molecular weight in the range described above is used, an olefin-based resin microporous film, which has excellent film-forming stability and in which micropores are uniformly formed, can be provided.

The molecular weight distribution (weight average molecular weight Mw/number average molecular weight Mn) of the olefin-based resin is preferably 7.5 to 12, and more preferably 8 to 11. When an olefin-based resin having a molecular weight distribution in the range described above is used, an olefin-based resin microporous film having a high surface aperture ratio, excellent ion permeability, and excellent mechanical strength can be provided.

Here, the weight average molecular weight and the number average molecular weight of the olefin-based resin are values measured by a GPC (gel permeation chromatography) method and calculated relative to polystyrene standards. Specifically, 6 mg to 7 mg of an olefin-based resin is collected, the collected olefin-based resin is supplied to a test tube, subsequently an o-DCB (ortho-dichlorobenzene) solution containing 0.05% by weight of BHT (dibutylhydroxytoluene) is added to the test tube, and the mixture is diluted such that the propylene-based resin concentration reaches 1 mg/mL. Thus, a diluted liquid is produced.

The olefin-based resin is dissolved in the o-DCB solution of BHT by shaking the diluted liquid over 1 hour at a speed of rotation of 25 rpm at 145°C using a dissolution and filtration apparatus, and the solution is used as a measurement sample. The weight average molecular weight and the number average molecular weight of the olefin-based resin can be measured according to a GPC method using this measurement sample.

The weight average molecular weight and the number average molecular weight of the olefin-based resin can be measured using, for example, an analytical apparatus and analysis conditions described below.

Analytical apparatus: trade name: "HLC-8121GPC/HT" manufactured by TOSOH Corp.

Analysis conditions

Column:

```
TSKgelGMHHR-H(20)HT × three columns



TSKguardcolumn-HHR(30)HT × one column
```

Mobile phase: o-DCB 1.0 mL/min
Sample concentration: 1 mg/mL
Detector: Blythe type refractometer
Standard material: Polystyrene (manufactured by Tosoh Corp., molecular weight: 500 to 8,420,000)
Elution conditions: 145°C
SEC temperature: 145°C

The melting point of the olefin-based resin is preferably 160°C to 170°C, and more preferably 160°C to 165°C. When an olefin-based resin having a melting point in the range described above is used, an olefin-based resin microporous film, which has excellent film-forming stability and in which the decrease in mechanical strength at a high temperature is suppressed, can be provided.

Meanwhile, according to the invention, the melting point of the olefin-based resin can be measured by the procedure described below using a differential scanning calorimeter (for example, Seiko Instruments, Inc., apparatus name: "DSC220C" or the like). First, 10 mg of an olefin-based resin is heated from 25°C to 250°C at a rate of temperature increase of 10°C/min, and is maintained at 250°C for 3 minutes. Next, the olefin-based resin is cooled from 250°C to 25°C at a rate of temperature decrease of 10°C/min, and is maintained at 25°C for 3 minutes. Subsequently, the olefin-based resin is reheated from 25°C to 250°C at a rate of temperature increase of 10°C/min, and the temperature at the apex of an endotherm peak in this reheating process is designated as the melting point of the olefin-based resin.

[Method for producing synthetic resin microporous film]

The synthetic resin microporous film is more preferably an olefin-based resin microporous film produced by a stretching method. An olefin-based resin microporous film produced by a stretching method is particularly prone to undergo thermal contraction at a high temperature due to the residual strain generated by stretching. Therefore, the effect according to the invention can be manifested particularly effectively by using such an olefin-based resin microporous film.

Specific examples of the method for producing an olefin-based resin microporous film by a stretching method include: (1) a method including a step of obtaining an olefin-based resin film by extruding an olefin-based resin, a step of generating and growing lamellar crystals in this olefin-based resin film, and a step of stretching the olefin-based resin film, separating the lamellar crystals apart from each other, and thereby obtaining an olefin-based resin microporous film in which micropores are formed; and (2) a method including a step of obtaining an olefin-based resin film by extruding an olefin-based resin composition containing an olefin-based resin and a filler, and a step of uniaxially stretching or biaxially stretching this olefin-based resin film, detaching the interface between the olefin-based resin and the filler, and thereby obtaining an olefin-based resin microporous film in which micropores are formed. Method (1) is preferred because an olefin-based resin microporous film in which a large number of micropores are uniformly formed is obtained.

A particularly preferred method for producing an olefin-based resin microporous film is a method including the following steps:

an extrusion step of melt kneading an olefin-based resin in an extruder at (melting point of the olefin-based resin + 20°C) to (melting point of the olefin-based resin + 100°C), extruding the olefin-based resin through a T-die installed at the tip of the extruder, and thereby obtaining an olefin-based resin film;
a aging step of aging the olefin-based resin film obtained after the extrusion step at (melting point of the olefin-based resin - 30°C) to (melting point of the olefin-based resin - 1°C);
a first stretching step of uniaxially stretching the olefin-based resin film obtained after the aging step to a stretch ratio of 1.2 times to 1.6 times at a surface temperature of the film of -20°C or higher but lower than 100°C;
a second stretching step of uniaxially stretching the olefin-based resin film that has been subjected to stretching in the first stretching step, to a stretch ratio of 1.2 times to 2.2 times at a surface temperature of the film of 100°C to 150°C; and
an annealing step of annealing the olefin-based resin film that has been subjected to stretching in the second stretching step.

According to the method described above, an olefin-based resin microporous film, in which a large number of micropores that penetrate through the film in the film thickness direction are formed, can be obtained. Even if a coating layer is formed on at least a portion of the surface of such an olefin-based resin microporous film, the micropores are not easily blocked by the coating layer, and a decrease in the gas permeability or the ion permeability of the heat-resistant synthetic resin microporous film can be significantly reduced.

(Extrusion step)

An olefin-based resin film containing an olefin-based resin can be produced by supplying an olefin-based resin to an extruder, melt kneading the olefin-based resin, and then extruding the olefin-based resin through a T-die installed at the tip of the extruder.

The temperature of the olefin-based resin at the time of melt kneading the olefin-based resin in an extruder is preferably (melting point of the olefin-based resin + 20°C) to (melting point of the olefin-based resin + 100°C), more preferably (melting point of the olefin-based resin + 25°C) to (melting point of the olefin-based resin + 80°C), and particularly preferably (melting point of the olefin-based resin + 25°C) to (melting point of the olefin-based resin + 50°C). By adjusting the temperature of the olefin-based resin at the time of melt kneading to (melting point of the olefin-based resin + 20°C) or higher, an olefin-based resin microporous film having a uniform thickness can be obtained. Furthermore, when the temperature of the olefin-based resin at the time of melt kneading is adjusted to (melting point of the olefin-based resin + 100°C) or lower, orientation of the olefin-based resin can be enhanced, and the production of lamellae can be accelerated.

The draw ratio on the occasion of extruding the olefin-based resin from an extruder in a film form is preferably 50 to 300, more preferably 65 to 250, and particularly preferably 70 to 250. When the draw ratio is adjusted to 50 or more, the tension applied to the olefin-based resin can be enhanced. Thereby, the olefin-based resin is sufficiently oriented, and the production of lamellae can be accelerated. Also, when the draw ratio is adjusted to 300 or less, the film-forming stability of the olefin-based resin film can be enhanced. Thereby, an olefin-based resin microporous film having a uniform thickness or width can be obtained.

Meanwhile, the draw ratio denotes a value obtained by dividing the clearance of the lips of a T-die by the thickness of the olefin-based resin film extruded through the T-die. The measurement of the clearance of the lips of a T-die can be carried out by measuring the clearance of the lips of the T-die at 10 or more sites using a clearance gauge according to JIS B7524 (for example a JIS clearance gauge manufactured by Nagai Gauges Co., Ltd.), and determining the arithmetic mean value of the measured values. Furthermore, the thickness of the olefin-based resin film extruded through the T-die can be obtained by measuring the thickness of the olefin-based resin film extruded through the T-die using a dial gauge (for example, a signal ABS Digimatic Indicator manufactured by Mitutoyo Corp.) at 10 or more sites, and determining the arithmetic mean value of the measured values.

The rate of film formation of the olefin-based resin film is preferably 10 m/min to 300 m/min, more preferably 15 m/min to 250 m/min, and particularly preferably 15 m/min to 30 m/min. When the rate of film formation of the olefin-based resin film is set to 10 m/min or more, the tension applied to the olefin-based resin can be increased. Thereby, the olefin-based resin molecules can be sufficiently oriented, and the production of lamellae can be accelerated. Furthermore, when the rate of film formation of the olefin-based resin film is set to 300 m/min or less, the film-forming stability of the olefin-based resin film can be enhanced. Thereby, an olefin-based resin microporous film having a uniform thickness or width can be obtained.

Then, as the olefin-based resin film extruded through a T-die is cooled until the surface temperature of the film reaches (melting point of the olefin-based resin - 100°C) or lower, the olefin-based resin constituting the olefin-based resin film is crystallized, and lamellae are produced to a large extent. In this invention, the olefin-based resin molecules that constitute the olefin-based resin film are oriented in advance by extruding a melt kneaded olefin-based resin, and then the olefin-based resin film is cooled. Thereby, the portions in which the olefin-based resin is oriented can accelerate the production of lamellae.

The surface temperature of the cooled olefin-based resin film is preferably lower than or equal to a temperature lower by 100°C than the melting point of the olefin-based resin, more preferably a temperature lower by 140°C to 110°C than the melting point of the olefin-based resin, and particularly preferably a temperature lower by 135°C to 120°C than the melting point of the olefin-based resin. When the surface temperature of the olefin-based resin film is cooled to the range described above, the olefin-based resin can be crystallized, and thus lamellae can be produced to a large extent.

(Aging step)

Subsequently, the olefin-based resin film obtained by the extrusion step described above is aged. This step of aging the olefin-based resin is carried out in order to grow the lamellae produced in the olefin-based resin film during the extrusion step. Thereby, a laminated lamellar structure, in which crystallized areas (lamellae) and non-crystalline areas are alternately arranged in the extrusion direction of the olefin-based resin film, can be formed. During the step of stretching the olefin-based resin film that will be described below, fissures are generated not within the lamellae but between the lamellae, and thus minute micropores can be formed from these fissures as starting points.

The aging step is carried out by aging the olefin-based resin film obtained by the extrusion step at (melting point of the olefin-based resin - 30°C) to (melting point of the olefin-based resin - 1°C).

The aging temperature of the olefin-based resin film is preferably (melting point of the olefin-based resin - 30°C) to (melting point of the olefin-based resin - 1°C), and more preferably (melting point of the olefin-based resin - 25°C) to (melting point of the olefin-based resin - 10°C). When the aging temperature of the olefin-based resin film is set to (melting point of the olefin-based resin - 30°C) or higher, crystallization of the olefin-based resin can be sufficiently accelerated. Furthermore, when the aging temperature of the olefin-based resin film is set to (melting point of the olefin-based resin - 1°C) or lower, disintegration of the lamellar structure caused by relaxation of the orientation of the olefin-based resin molecules can be decreased.

Meanwhile, the aging temperature of the olefin-based resin film is the surface temperature of the olefin-based resin film. However, in a case in which the surface temperature of the olefin-based resin film cannot be measured, for example, in a case in which the olefin-based resin film is aged in a state of being wound in a roll form, the ambient temperature is defined as the aging temperature of the olefin-based resin. For example, in a case in which the olefin-based resin film is aged in a state of being wound in a roll form inside a heating apparatus such as an air heating furnace, the temperature inside the heating apparatus is designated as the aging temperature.

Aging of the olefin-based resin film may be carried out while the olefin-based resin film is caused to move, or may be carried out in a state of having the olefin-based resin film wound in a roll form.

In the case of aging the olefin-based resin film while moving, the aging time for the olefin-based resin film is preferably 1 minute or longer, and more preferably 5 minutes to 60 minutes.

In the case of aging the olefin-based resin film in a state of being wound in a roll form, the aging time is preferably 1 hour or longer, and more preferably 15 hours or longer. When the olefin-based resin film in a state of being wound in a roll form is aged in such a aging time, the temperature of the olefin-based resin film is overall adjusted to the aging temperature described above, and aging can be carried out sufficiently. Thereby, lamellae can be caused to sufficiently grow in the olefin-based resin film. Also, from the viewpoint of reducing thermal deterioration of the olefin-based resin film, the aging time is preferably 35 hours or shorter, and more preferably 30 hours or shorter.

Meanwhile, in a case in which the olefin-based resin film is aged in a state of being wound in a roll form, it is desirable that the olefin-based resin film is unwound from the olefin-based resin film roll obtained after the aging step, and then the stretching steps and the annealing step described below are carried out.

(First stretching step)

Next, a first stretching step of subjecting the olefin-based resin film obtained after the aging step to uniaxial stretching, to a stretch ratio of 1.2 times to 1.6 times at a surface temperature of the resin film of -20°C or higher but lower than 100°C, is carried out. In the first stretching step, the olefin-based resin film is preferably uniaxially stretched in the extrusion direction only. In the first stretching step, a majority of the lamellae in the olefin-based resin film are not molten, and by separating the lamellae apart from each other by stretching, fine fissures are caused to be efficiently generated independently in the non-crystalline areas between the lamellae. Thus, a large number of micropores are reliably formed from these fissures as starting points.

In the first stretching step, the surface temperature of the olefin-based resin film is preferably -20°C or higher but lower than 100°C, more preferably 0°C to 80°C, and particularly preferably 10°C to 40°C. When the surface temperature of the olefin-based resin film is adjusted to - 20°C or higher, breakage of the olefin-based resin film at the time of stretching can be reduced. Also, when the surface temperature of the olefin-based resin film is adjusted to a temperature lower than 100°C, fissures can be generated in the non-crystalline areas between the lamellae.

In the first stretching step, the stretch ratio of the olefin-based resin film is preferably 1.2 times to 1.6 times, and more preferably 1.25 times to 1.5 times. When the stretch ratio is set to 1.2 times or more, micropores can be formed in the non-crystalline areas between the lamellae. Furthermore, when the stretch ratio is set to 1.6 times or less, micropores can be uniformly formed in the olefin-based resin microporous film.

According to the invention, the stretch ratio of the olefin-based resin denotes the value obtained by dividing the length of the olefin-based resin film obtained after stretching in the stretching direction by the length of the olefin-based resin film before stretching.

The stretching rate in the first stretching step for the olefin-based resin film is preferably 20%/min or more, more preferably 20%/min to 500%/min, and particularly preferably 20%/min to 70%/min. When the stretching rate is set to 20%/min or more, micropores can be uniformly formed in the non-crystalline areas between the lamellae. When the stretching rate is set to 500%/min or less, breakage of the olefin-based resin film in the first stretching step can be suppressed.

According to the invention, the stretching rate of the olefin-based resin film denotes the rate of change in the dimension in the stretching direction of the olefin-based resin film per unit time.

The method for stretching the olefin-based resin film in the first stretching step is not particularly limited as long as the olefin-based resin film can be uniaxially stretched, and for example, a method of uniaxially stretching the olefin-based resin film at a predetermined temperature using a stretching apparatus which uses plural rolls having different circumferential velocities may be used.

(Second stretching step)

Next, a second stretching step of subjecting the olefin-based resin film obtained after the first stretching step to a uniaxial stretching treatment, to a stretch ratio of 1.2 times to 2.2 times at a surface temperature of the resin film of 100°C to 150°C, is carried out. Also in the second stretching step, the olefin-based resin film is preferably uniaxially stretched in the extrusion direction only. When a stretching treatment is carried out in such a second stretching step, the large number of micropores formed in the olefin-based resin film during the first stretching step can be caused to grow.

In the second stretching step, the surface temperature of the olefin-based resin film is preferably 100°C to 150°C, and more preferably 110°C to 140°C. When the surface temperature of the olefin-based resin film is adjusted to 100°C or higher, the micropores formed in the olefin-based resin film during the first stretching step can be caused to grow to a large extent. Also, when the surface temperature of the olefin-based resin film is adjusted to 150°C or lower, blocking of the micropores formed in the olefin-based resin film during the first stretching step can be significantly reduced.

In the second stretching step, the stretch ratio of the olefin-based resin film is preferably 1.2 times to 2.2 times, and more preferably 1.5 times to 2 times. When the stretch ratio of the olefin-based resin film is set to 1.2 times or more, the micropores formed in the olefin-based resin film during the first stretching step can be caused to grow. Thereby, an olefin-based resin microporous film having excellent gas permeability can be provided. Furthermore, when the stretch ratio of the olefin-based resin film is set to 2.2 times or less, blocking of the micropores formed in the olefin-based resin film during the first stretching step can be suppressed.

In the second stretching step, the stretching rate for the olefin-based resin film is preferably 500%/min or less, more preferably 400%/min or less, and particularly preferably 15%/min to 60%/min. When the stretching rate of the olefin-based resin film is adjusted to the range described above, micropores can be uniformly formed in the olefin-based resin film.

The method for stretching the olefin-based resin film in the second stretching step is not particularly limited as long as the olefin-based resin film can be uniaxially stretched, and for example, a method of uniaxially stretching the olefin-based resin film at a predetermined temperature using a stretching apparatus which uses plural rolls having different circumferential velocities may be used.

(Annealing step)

Next, an annealing step of subjecting the olefin-based resin film that has been uniaxially stretched in the second stretching step to an annealing treatment is carried out. This annealing step is carried out in order to relieve the residual strain produced in the olefin-based resin film caused by the stretching applied in the stretching steps described above, and to suppress the occurrence of thermal contraction caused by heating in the resulting olefin-based resin microporous film.

The surface temperature of the olefin-based resin film during the annealing step is preferably (surface temperature of the olefin-based resin film during the second stretching step) to (melting point of the olefin-based resin - 10°C). When the surface temperature of the olefin-based resin film is adjusted to a temperature higher than or equal to the surface temperature of the olefin-based resin film during the second stretching step, the residual strain in the olefin-based resin film can be sufficiently relieved. Thereby, the dimensional stability at the time of heating of the olefin-based resin microporous film can be enhanced. Furthermore, when the surface temperature of the olefin-based resin film is adjusted to (melting point of the olefin-based resin - 10°C) or lower, blocking of the micropores formed in the stretching steps can be suppressed.

The shrinkage of the olefin-based resin film during the annealing step is preferably 25% or less. When the shrinkage of the olefin-based resin film is adjusted to 25% or less, the occurrence of slackening of the olefin-based resin film can be reduced, and the olefin-based resin film can be annealed uniformly.

Meanwhile, the shrinkage of the olefin-based resin film denotes the value obtained by dividing the contracted length of the olefin-based resin film in the stretching direction during the annealing step, by the length of the olefin-based resin film in the stretching direction after the second stretching step, and multiplying the resultant by 100.

The synthetic resin microporous film contains micropores that penetrate through in the film thickness direction. The heat-resistant synthetic resin microporous film can be imparted with excellent ion permeability by the micropores. Thereby, the heat-resistant synthetic resin microporous film can transmit ions such as lithium ions in the thickness direction of the film.

The surface aperture ratio of the synthetic resin microporous film is preferably 25% to 55%, and more preferably 30% to 50%. When a synthetic resin microporous film having a surface aperture ratio in the range described above is used, a heat-resistant synthetic resin microporous film having both excellent mechanical strength and excellent ion permeability can be provided.

Meanwhile, the surface aperture ratio of the synthetic resin microporous film can be measured by the procedure described below. First, in an arbitrary area of the synthetic resin microporous film surface, a planar rectangular-shaped measurement area measuring 9.6 $\mu$m in length × 12.8 $\mu$m in width is defined, and a photograph of this measurement area is taken at a magnification ratio of 10,000 times.

Next, each micropore formed within the measurement area is surrounded by a rectangle in which any one of the longer edge or the shorter edge is parallel to the stretching direction. This rectangle is adjusted such that both the longer edge and the shorter edge have the minimum dimensions. The area of the rectangle is designated as the aperture area of each micropore. The aperture areas of the various micropores are summed up, and the total aperture area S ($\mu$m$^2$) of the micropores is calculated. The value obtained by dividing this total aperture area S ($\mu$m$^2$) of the micropores by 122.88 $\mu$m$^2$ (9.6 $\mu$m × 12.8 $\mu$m), and multiplying the resultant by 100, is designated as the surface aperture ratio (%). Meanwhile, in regard to a micropore that extends over a measurement area and an area that is not the measurement area, only the area existing inside the measurement area in the relevant micropore is taken as the object of measurement.

The maximum major axis of the opening end of a micropore in the synthetic resin microporous film is preferably 100 nm to 1 $\mu$m, and more preferably 100 nm to 800 nm. A micropore having a maximum major axis of the opening end in the range described above is not prone to be blocked by a coating layer, and a decrease in the gas permeability of the heat-resistant synthetic resin microporous film caused by formation of a coating layer can be significantly reduced.

The average major axis of the opening ends of micropores in the synthetic resin microporous film is preferably 100 nm to 500 nm, and more preferably 200 nm to 500 nm. Micropores having an average major axis of the opening ends in the range described above are not prone to be blocked by a coating layer, and a decrease in the gas permeability of the heat-resistant synthetic resin microporous film caused by formation of a coating layer can be significantly reduced.

Meanwhile, the maximum major axis and the average major axis of the opening ends of micropores in a synthetic resin microporous film are measured as follows. First, the surface of the synthetic resin microporous film is carboncoated. Next, images of any arbitrary 10 sites on the surface of the synthetic resin microporous film are taken at a magnification ratio of 10,000 times using a scanning electron microscope. Meanwhile, the imaging range is set to a planar rectangular range measuring 9.6 $\mu$m in length × 12.8 $\mu$m in width on the surface of the synthetic resin microporous film.

The major axes of the opening ends of various micropores shown in the photograph thus obtained are measured. The maximum major axis among the major axes of the opening ends in the micropores is designated as the maximum major axis of the opening ends of the micropores. The arithmetic mean value of the major axes of the opening ends in the various micropores is designated as the average major axis of the opening ends of the micropores. Meanwhile, the major axis of the opening end of a micropore is defined as the diameter of a true sphere having the minimum diameter that can circumscribe this opening end of the micropore. A micropore that exits over an imaging range and an area that is not an imaging range is excluded from the object of measurement.

The pore density of the synthetic resin microporous film is preferably 15 pores/$\mu$m$^2$ or more, and more preferably

17 pores/$\mu$m$^2$ or more. When a synthetic resin microporous film having a pore density of 15 pores/$\mu$m$^2$ or more is used, a heat-resistant synthetic resin microporous film having excellent mechanical strength and ion permeability can be provided.

Meanwhile, the pore density of a synthetic resin microporous film is measured by the procedure described below. First, a planar rectangular-shaped measurement area measuring 9.6 $\mu$m in length $\times$ 12.8 $\mu$m in width is defined in an arbitrary portion of the synthetic resin microporous film surface, and a photograph of this measurement area is taken at a magnification ratio of 10,000 times. Then, the number of micropores in the measurement area is measured, and the pore density can be calculated by dividing this number by 122.88 $\mu$m2 (9.6 $\mu$m $\times$ 12.8 $\mu$m).

The thickness of the synthetic resin microporous film is preferably 5 $\mu$m to 100 $\mu$m, and more preferably 10 $\mu$m to 50 $\mu$m.

Meanwhile, according to the invention, the measurement of the thickness of a synthetic resin microporous film can be carried out by the following procedure. That is, the thicknesses at any arbitrary 10 sites of the synthetic resin microporous film are measured using a dial gauge, and the arithmetic mean value thereof is designated as the thickness of the synthetic resin microporous film.

The gas permeability of the synthetic resin microporous film is preferably 50 sec/100 mL to 600 sec/100 mL, and more preferably 100 sec/100 mL to 300 sec/100 mL. When a synthetic resin microporous film having gas permeability in the range described above is used, a heat-resistant synthetic resin microporous film having both excellent mechanical strength and excellent ion permeability can be provided.

Meanwhile, the gas permeability of a synthetic resin microporous film is defined as a value obtained by measuring the gas permeability at 10 sites at an interval of 10 cm in the length direction of the synthetic resin microporous film according to JIS P8117 in an atmosphere at 23°C and a relative humidity of 65%, and calculating the arithmetic mean value thereof.

[Coating layer]

The heat-resistant synthetic resin microporous film of the invention includes a coating layer formed on at least a portion of the surface of the synthetic resin microporous film described above. The coating layer contains a polymer of a polymerizable compound having a bifunctional or higher-functional radical polymerizable functional group. A coating layer containing such a polymer has high hardness and also has adequate elasticity and ductility. Therefore, when the coating layer containing a polymer is used, a heat-resistant synthetic resin microporous film having reduced deterioration of the mechanical strength such as piercing strength and having enhanced heat resistance can be provided. The content of the polymer of the polymerizable compound having a bifunctional or higher-functional radical polymerizable functional group in the coating layer is preferably 50% by weight, preferably 60% by weight, more preferably 70% by weight or more, particularly preferably 90% by weight or more, and most preferably 100% by weight.

The coating layer can significantly enhance the heat resistance of the heat-resistant synthetic resin microporous film, even if the coating layer does not contain inorganic particles. Meanwhile, according to the invention, the coating layer may contain inorganic particles as necessary. Examples of the inorganic particles include inorganic particles that are generally used in heat-resistant porous layers. Examples of the material that constitute the inorganic particles include $Al_2O_3$, $SiO_2$, $TiO_2$, and MgO.

The coating layer contains a polymer of a polymerizable compound having a bifunctional or higher-functional radical polymerizable functional group. The polymerizable compound having a bifunctional or higher-functional radical polymerizable functional group may have two or more functional groups containing a radical polymerizable unsaturated bond that is capable of radical polymerization by irradiation of active energy radiation (radical polymerizable functional group), in one molecule. The functional group having a radical polymerizable unsaturated bond capable of radical polymerization is not particularly limited; however, examples thereof include a (meth)acryloyl group and a vinyl group, and a (meth)acryloyl group is preferred.

Examples of the polymerizable compound include a polyfunctional acrylic monomer, a vinyl-based oligomer having a vinyl group, a polyfunctional (meth)acrylate modification product, a dendritic polymer having a bifunctional or higher-functional (meth)acryloyl group, a urethane (meth)acrylate oligomer having a bifunctional or higher-functional (meth)acryloyl group, and tricyclodecane dimethanol di(meth)acrylate.

Meanwhile, according to the invention, (meth)acrylate means acrylate or methacrylate. (Meth)acryloyl means acryloyl or methacryloyl. Furthermore, (meth)acrylic acid means acrylic acid or methacrylic acid.

The polyfunctional acrylic monomer may have two or more radical polymerizable functional groups in one molecule; however, a polyfunctional acrylic monomer with trifunctionality or higher functionality having three or more radical polymerizable functional groups in one molecule is preferred, while a polyfunctional acrylic monomer with trifunctionality to hexafunctionality is more preferred.

Examples of the polyfunctional acrylic monomer include:

polyfunctional acrylic monomers with bifunctionality, such as 1,9-nonanediol di(meth)acrylate, 1,4-butanediol di(meth)acrylate, 1,6-hexanediol di(meth)acrylate, tripropylene glycol di(meth)acrylate, 2-hydroxy-3-acryloyloxypropyl di(meth)acrylate, ethylene glycol di(meth)acrylate, diethylene glycol di(meth)acrylate, triethylene glycol di(meth)acrylate, 1,10-decanediol di(meth)acrylate, neopentyl glycol di(meth)acrylate, and glycerin di(meth)acrylate; polyfunctional acrylic monomers with trifunctionality, such as trimethylolpropane tri(meth)acrylate and pentaerythritol tri(meth)acrylate; polyfunctional acrylic monomers with tetrafunctionality, such as pentaerythritol tetra(meth)acrylate and ditrimethylolpropane tetra(meth)acrylate; polyfunctional acrylic monomers with pentafunctionality, such as dipentaerythritol penta(meth)acrylate; and polyfunctional acrylic monomers with hexafunctionality, such as dipentaerythritol hexa(meth)acrylate.

There are no particular limitations on the vinyl-based oligomer, and examples thereof include a polybutadiene-based oligomer. Meanwhile, a polybutadiene-based oligomer means an oligomer having a butadiene skeleton. An example of the polybutadiene-based oligomer may be a polymer containing a butadiene component as a monomer component. Examples of the monomer component of the polybutadiene-based oligomer include 1,2-butadiene components and 1,3-butadiene components. Among them, 1,2-butadiene components are preferred.

The vinyl-based oligomer may be an oligomer having hydrogen atoms at both ends of the main chain, or may be an oligomer in which the terminal hydrogen atoms are substituted by a hydroxyl group, a carboxyl group, a cyano group, or a hydroxyalkyl group such as a hydroxyethyl group. Furthermore, the vinyl-based oligomer may also be an oligomer having a radical polymerizable functional group such as an epoxy group, a (meth)acryloyl group, and a vinyl group, in side chains or at the ends of the molecular chain.

Examples of the polybutadiene-based oligomer include:

a polybutadiene oligomer such as a poly(1,2-butadiene) oligomer or a poly(1,3-butadiene) oligomer;
an epoxidized polybutadiene oligomer having an epoxy group introduced into the molecule as a result of epoxidation of at least a portion of the carbon-carbon double bonds contained in the butadiene skeleton; and
a polybutadiene (meth)acrylate oligomer having a butadiene skeleton and having a (meth)acryloyl group in side chains or at the ends of the main chain.

Regarding the polybutadiene-based oligomer, a commercially available product can be used. Examples of the poly(1,2-butadiene) oligomer include trade names: "B-1000", "B-2000", and "B-3000" manufactured by Nippon Soda Co., Ltd. Examples of the polybutadiene oligomer having hydroxyl groups at both ends of the main chain include trade names: "G-1000", "G-2000", and "G-3000" manufactured by Nippon Soda Co., Ltd. Examples of the epoxidized polybutadiene oligomer include trade names: "JP-100" and "JP-200" manufactured by Nippon Soda Co., Ltd. Examples of the polybutadiene (meth)acrylate oligomer include trade names: "TE-2000", "EA-3000", and "EMA-3000" manufactured by Nippon Soda Co., Ltd.

The polyfunctional (meth)acrylate modification product may have two or more radical polymerizable functional groups in one molecule; however, a polyfunctional (meth)acrylate modification product with trifunctionality or higher functionality having three or more radical polymerizable functional groups in one molecule is preferred, while a polyfunctional (meth)acrylate modification product with trifunctionality to hexafunctionality having three to six radical polymerizable functional groups in one molecule is more preferred.

Preferred examples of the polyfunctional (meth)acrylate modification product include an alkylene oxide modification product of a polyfunctional (meth)acrylate, and a caprolactone modification product of a polyfunctional (meth)acrylate.

An alkylene oxide modification product of a polyfunctional (meth)acrylate is obtained preferably by esterifying an adduct of a polyhydric alcohol and an alkylene oxide with (meth)acrylic acid. Furthermore, a caprolactone modification product of a polyfunctional (meth)acrylate is obtained preferably by esterifying an adduct of a polyhydric alcohol and a caprolactone with (meth)acrylic acid.

Examples of the polyhydric alcohol in the alkylene oxide modification product and the caprolactone modification product include trimethylolpropane, glycerol, pentaerythritol, dipentaerythritol, ditrimethylolpropane, and tris(2-hydroxyethyl)isocyanuric acid, and trimethylolpropane, pentaerythritol, glycerol, and dipentaerythritol are preferred.

Examples of the alkylene oxide in the alkylene oxide modification product include ethylene oxide, propylene oxide, isopropylene oxide, and butylene oxide, and ethylene oxide, propylene oxide, and isopropylene oxide are preferred.

Examples of the caprolactone in the caprolactone modification product include $\varepsilon$-caprolactone, $\delta$-caprolactone, and $\gamma$-caprolactone.

In the alkylene oxide modification product of a polyfunctional (meth)acrylate, the average number of added moles of alkylene oxide may be 1 mole or more. The average number of added moles of alkylene oxide is preferably 1 mole to 10 moles, more preferably 1 mole to 6 moles, particularly preferably 1 mole to 4 moles, and most preferably 1 mole to 3 moles.

Examples of the polyfunctional (meth)acrylate modification product with trifunctionality include:

alkylene oxide modification products of trimethylolpropane tri(meth)acrylate, such as an ethylene oxide modification product of trimethylolpropane tri(meth)acrylate, a propylene oxide modification product of trimethylolpropane tri(meth)acrylate, an isopropylene oxide modification product of trimethylolpropane tri(meth)acrylate, a butylene oxide modification product of trimethylolpropane tri(meth)acrylate, and an ethylene oxide•propylene oxide modification product of trimethylolpropane tri(meth)acrylate, and caprolactone modification products of trimethylolpropane tri(meth)acrylate;

alkylene oxide modification products of glyceryl tri(meth)acrylate, such as an ethylene oxide modification product of glyceryl tri(meth)acrylate, a propylene oxide modification product of glyceryl tri(meth)acrylate, an isopropylene oxide modification product of glyceryl tri(meth)acrylate, a butylene oxide modification product of glyceryl tri(meth)acrylate, and an ethylene oxide•propylene oxide modification product of glyceryl tri(meth)acrylate, and caprolactone modification products of glyceryl tri(meth)acrylate;

alkylene oxide modification products of pentaerythritol tri(meth)acrylate, such as an ethylene oxide modification product of pentaerythritol tri(meth)acrylate, a propylene oxide modification product of pentaerythritol tri(meth)acrylate, an isopropylene oxide modification product of pentaerythritol tri(meth)acrylate, a butylene oxide modification product of pentaerythritol tri(meth)acrylate, and an ethylene oxide•propylene oxide modification product of pentaerythritol tri(meth)acrylate, and caprolactone modification products of pentaerythritol tri(meth)acrylate; and

alkylene oxide modification products of tris(2-acryloxyethyl) isocyanurate, such as an ethylene oxide modification product of tris(2-acryloxyethyl) isocyanurate, a propylene oxide modification product of tris(2-acryloxyethyl) isocyanurate, an isopropylene oxide modification product of tris(2-acryloxyethyl) isocyanurate, a butylene oxide modification product of tris(2-acryloxyethyl) isocyanurate, and an ethylene oxide•propylene oxide modification product of tris(2-acryloxyethyl) isocyanurate, and caprolactone modification products of tris(2-acryloxyethyl) isocyanurate.

The polyfunctional (meth)acrylate modification product with trifunctionality is preferably an alkylene oxide modification product of trimethylolpropane tri(meth)acrylate, or an alkylene oxide modification product of glyceryl tri(meth)acrylate; and more preferably an ethylene oxide modification product of trimethylolpropane tri(meth)acrylate, a propylene oxide modification product of trimethylolpropane tri(meth)acrylate, or an ethylene oxide modification product of glyceryl tri(meth)acrylate.

Examples of the polyfunctional (meth)acrylate modification product with tetrafunctionality include:

alkylene oxide modification products of pentaerythritol tetra(meth)acrylate, such as an ethylene oxide modification product of pentaerythritol tetra(meth)acrylate, a propylene oxide modification product of pentaerythritol tetra(meth)acrylate, an isopropylene oxide modification product of pentaerythritol tetra(meth)acrylate, a butylene oxide modification product of pentaerythritol tetra(meth)acrylate, and an ethylene oxide•propylene oxide modification product of pentaerythritol tetra(meth)acrylate, and caprolactone modification products of pentaerythritol tetra(meth)acrylate; and

alkylene oxide modification products of ditrimethylolpropane tetra(meth)acrylate, such as an ethylene oxide modification product of ditrimethylolpropane tetra(meth)acrylate, a propylene oxide modification product of ditrimethylolpropane tetra(meth)acrylate, an isopropylene oxide modification product of ditrimethylolpropane tetra(meth)acrylate, a butylene oxide modification product of ditrimethylolpropane tetra(meth)acrylate, and an ethylene oxide•propylene oxide modification product of ditrimethylolpropane tetra(meth)acrylate, and caprolactone modification products of ditrimethylolpropane tetra(meth)acrylate.

The polyfunctional (meth)acrylate modification product with tetrafunctionality is preferably an alkylene oxide modification product of pentaerythritol tetra(meth)acrylate, and more preferably an ethylene oxide modification product of pentaerythritol tetra(meth)acrylate.

Specific examples of the polyfunctional (meth)acrylate modification product with pentafunctionality or higher functionality include:

alkylene oxide modification products of dipentaerythritol poly(meth)acrylate, such as an ethylene oxide modification product of dipentaerythritol poly(meth)acrylate, a propylene oxide modification product of dipentaerythritol poly(meth)acrylate, an isopropylene oxide modification product of dipentaerythritol poly(meth)acrylate, a butylene oxide modification product of dipentaerythritol poly(meth)acrylate, and an ethylene oxide•propylene oxide modification product of dipentaerythritol poly(meth)acrylate, and caprolactone modification products of dipentaerythritol poly(meth)acrylate.

The polyfunctional (meth)acrylate modification product with pentafunctionality or higher functionality is preferably an alkylene oxide modification product of dipentaerythritol poly(meth)acrylate, more preferably an isopropylene oxide modification product of dipentaerythritol poly(meth)acrylate, and particularly preferably an isopropylene oxide modification product of dipentaerythritol hexa(meth)acrylate.

Regarding the polyfunctional (meth)acrylate modification product, commercially available products can be used.

Examples of the ethylene oxide modification product of trimethylolpropane tri(meth)acrylate include trade names: "SR454", "SR499", and "SR502" manufactured by Sartomer Company, Inc.; trade name: "VISCOAT #360" manufactured by Osaka Organic Chemical Industry, Ltd.; and trade names: "MIRAMER M3130", "MIRAMER M3160", and "MIRAMER M3190" manufactured by Miwon Specialty Chemicals Co., Ltd. Examples of the propylene oxide modification product of trimethylolpropane tri(meth)acrylate include trade names: "SR492", "SR501", and "CD501" manufactured by Sartomer Company, Inc.; and trade name: "MIRAMER M360" manufactured by Miwon Specialty Chemical Co., Ltd. Examples of the isopropylene oxide modification product of trimethylolpropane tri(meth)acrylate include trade name: "TPA-330" manufactured by Nippon Kayaku Co., Ltd.

Examples of the ethylene oxide modification product of glyceryl tri(meth)acrylate include trade names: "A-GVL-3E" and "A-GVL-9E" manufactured by Shin Nakamura Chemical Co., Ltd. Examples of the propylene oxide modification product of glyceryl tri(meth)acrylate include trade names: "SR9020" and "CD9021" manufactured by Sartomer Company, Inc. Examples of the isopropylene oxide modification product of glyceryl tri(meth)acrylate include trade name:"GPO-303" manufactured by Nippon Kayaku Co., Ltd.

Examples of the caprolactone modification products of tris(2-acryloxyethyl) isocyanurate include trade names: "A-9300-1CL" and "A-9300-3CL" manufactured by Shin Nakamura Chemical Co., Ltd.

Examples of the ethylene oxide modification product of pentaerythritol tetra(meth)acrylate include trade name: "MIRAMER M4004" manufactured by Miwon Specialty Chemical Co., Ltd. Examples of the ethylene oxide modification product of ditrimethylolpropane tetra(meth)acrylate include trade name: "AD-TMP-4E" manufactured by Shin Nakamura Chemical Co., Ltd.

Examples of the ethylene oxide modification product of dipentaerythritol polyacrylate include trade name: "A-DPH-12E" manufactured by Shin Nakamura Chemical Co., Ltd. Examples of the isopropylene oxide modification product of dipentaerythritol polyacrylate include trade name: "A-DPH-6P" manufactured by Shin Nakamura Chemical Co., Ltd.

A dendritic polymer having bifunctional or higher-functional (meth)acryloyl groups means a spherical macromolecule in which branched molecules each having (meth)acryloyl groups arranged therein are assembled radially.

Examples of the dendritic polymer having (meth)acryloyl groups include a dendrimer having bifunctional or higher-functional (meth)acryloyl groups, and a hyperbranched polymer having bifunctional or higher-functional (meth)acryloyl groups.

The dendrimer having bifunctional or higher-functional (meth)acryloyl groups means a spherical polymer which contains bifunctional or higher-functional (meth)acrylate as branched molecules, and is obtainable by integrating (meth)acrylate in a spherical form.

A dendrimer may have two or more (meth)acryloyl groups in one molecule; however, a trifunctional or higher-functional dendrimer having three or more (meth)acryloyl groups in one molecule is preferred, while a polyfunctional dendrimer having 5 to 20 (meth)acryloyl groups in one molecule is more preferred.

The weight average molecular weight of the dendrimer is preferably 1,000 to 50,000, and more preferably 1,500 to 25,000. When the weight average molecular weight of the dendrimer is adjusted to the range described above, the bond density within a dendrimer molecule and the bond density between dendrimer molecules constitute the "dense" and the "sparse", and thereby, a coating layer having high hardness as well as adequate elasticity and ductility can be formed.

Meanwhile, the weight average molecular weight of a dendrimer is defined as the value measured using gel permeation chromatography (GPC) and calculated relative to polystyrene standards.

Regarding the dendritic polymer having bifunctional or higher-functional (meth)acryloyl groups, a commercially available product can also be used. Examples of the dendrimer having two or more (meth)acryloyl groups include trade names: "CN2302", "CN2303", and "CN2304" manufactured by Sartomer Company, Inc.; trade names: "V1000", "SUBARU-501", and "SIRIUS-501" manufactured by Osaka Organic Chemical Industry, Ltd.; and trade name: "A-HBR-5" manufactured by Shin Nakamura Chemical Co., Ltd.

A hyperbranched polymer having bifunctional or higher-functional (meth)acryloyl groups means a spherical polymer obtainable by modifying the surface and the interior of a highly branched structure having an irregular branched structure that is obtained by polymerizing an $AB_x$ type polyfunctional monomer (here, A and B represent functional groups that react with each other; and the number of B, X, is 2 or more), with a (meth)acroyl group.

A urethane (meth)acrylate oligomer having a bifunctional or higher-functional (meth)acryloyl group has two or more (meth)acryloyl groups in one molecule.

A urethane acrylate oligomer is obtained by, for example, causing a polyisocyanate compound to react with a (meth)acrylate having a hydroxyl group or an isocyanate group, and a polyol compound.

Examples of the urethane acrylate oligomer include:

(1) a urethane acrylate obtained by producing a terminal isocyanate group-containing urethane prepolymer by causing a polyol compound and a polyisocyanate compound to react with each other, and further causing the urethane prepolymer to react with a (meth)acrylate having a hydroxyl group; and (2) a urethane acrylate oligomer obtained by producing a terminal hydroxyl group-containing urethane prepolymer by causing a polyol compound and a polyisocyanate compound to react with each other, and further causing the urethane prepolymer to react with a (meth)acrylate having an isocyanate group.

Examples of the polyisocyanate compound include isophorone diisocyanate, 2,4-tolylene diisocyanate, 2,6-tolylene diisocyanate, 1,3-xylene diisocyanate, 1,4-xylene diisocyanate, and diphenylmethane-4,4'-diisocyanate.
Examples of the (meth)acrylate having a hydroxyl group include 2-hydroxyethyl (meth)acrylate, 2-hydroxypropyl (meth)acrylate, 2-hydroxybutyl (meth)acrylate, 4-hydroxybutyl (meth)acrylate, and polyethylene glycol (meth)acrylate. Examples of the (meth)acrylate having an isocyanate group include methacryloyloxyethyl isocyanate.
Examples of the polyol compound include polyol compounds of alkylene type, polycarbonate type, polyester type, or polyether type. Specific examples thereof include polyethylene glycol, polypropylene glycol, polytetramethylene glycol, polycarbonate diol, polyester diol, and polyether diol.
Regarding the urethane (meth)acrylate oligomer having a bifunctional or higher-functional (meth)acryloyl group, a commercially available product can also be used. Examples thereof include trade name: "UA-122P" manufactured by Shin Nakamura Chemical Co., Ltd.; trade name: "UF-8001G" manufactured by Kyoeisha Chemical Co., Ltd.; trade names: "CN977", "CN999", "CN963", "CN985", "CN970", "CN133", "CN975", and "CN997" manufactured by Sartomer Company, Inc.; trade name: "IRR214-K" manufactured by Daicel-Allnex, Ltd.; and trade names: "UX-5000", "UX-5102D-M20", "UX-5005", and "DPHA-40H" manufactured by Nippon Kayaku Co., Ltd. Furthermore, a special aliphatic oligomer such as trade name: "CN113" manufactured by Sartomer Company, Inc. can also be used as the polymerizable compound.
According to the invention, among the polymerizable compounds described above, a polyfunctional (meth)acrylate modification product, a dendritic polymer having bifunctional or higher-functional (meth)acryloyl groups, and a urethane (meth)acrylate oligomer having a bifunctional or higher-functional (meth)acryloyl group are preferred. Furthermore, the polymerizable compound is more preferably a polyfunctional (meth)acrylate modification product, particularly preferably a polyfunctional (meth)acrylate modification product with tetrafunctionality, and most preferably an ethylene oxide modification product of pentaerythritol tetra(meth)acrylate. When these polymerizable compounds are used, coating layers having high hardness as well as having adequate elasticity and ductility can be formed. Thereby, excellent heat resistance can be imparted to the heat-resistant synthetic resin microporous film without decreasing the mechanical strength.
In the case of using a polyfunctional (meth)acrylate modification product as the polymerizable compound, the content of the polyfunctional (meth)acrylate modification product in the polymerizable compound is preferably 30% by weight or more, more preferably 80% by weight or more, and particularly preferably 100% by weight. When a polymerizable compound including 30% by weight or more of the polyfunctional (meth)acrylate modification product is used, excellent heat resistance can be imparted to the resulting heat-resistant synthetic resin microporous film without causing deterioration of gas permeability.
Meanwhile, according to the invention, regarding the polymerizable compound, only one kind of the polymerizable compounds described above may be used, or two or more kinds of polymerizable compound may be used in combination.
The content of the coating layer in the heat-resistant synthetic resin microporous film is preferably 5 parts by weight to 80 parts by weight, more preferably 5 parts by weight to 60 parts by weight, particularly preferably 7 parts by weight to 50 parts by weight, and most preferably 10 parts by weight to 40 parts by weight, relative to 100 parts by weight of the synthetic resin microporous film. When the content of the coating layer is adjusted to the range described above, the coating layer can be uniformly formed without blocking the micropores at the surface of the synthetic resin microporous film. Thereby, a heat-resistant synthetic resin microporous film having enhanced heat resistance can be provided without causing deterioration of gas permeability.
The thickness of the coating layer is not particularly limited; however, the thickness is preferably 1 nm to 100 nm, and more preferably 5 nm to 50 nm. When the thickness of the coating layer is adjusted to the range described above, the coating layer can be uniformly formed without blocking the micropores at the surface of the synthetic resin microporous film. Thereby, a heat-resistant synthetic resin microporous film having enhanced heat resistance can be provided without causing deterioration of gas permeability.
The coating layer is formed on at least a portion of the synthetic resin microporous film surface; however, it is preferable that the coating layer is formed over the entire surface of the synthetic resin microporous film, and it is more preferable that the coating layer is formed so as to cover the entire surface of the synthetic resin microporous film and at least a portion of the inner wall surface of the micropores extending to this surface. Thereby, heat resistance of the heat-resistant synthetic resin microporous film can be further enhanced. Meanwhile, the synthetic resin microporous film surface refers to a portion remaining after excluding the portion corresponding to opening ends of the micropores, from the entire surfaces on both sides of the synthetic resin microporous film in a case in which the micropores are assumed to be solid parts.

[Method for forming coating layer]

Regarding the method for forming a coating layer, a method of coating at least a portion of the synthetic resin microporous film surface with a polymerizable compound having a bifunctional or higher-functional radical polymerizable functional group, and then irradiating the synthetic resin microporous film with active energy radiation is used.

(Coating step)

The synthetic resin microporous film surface is coated with a polymerizable compound having a bifunctional or higher-functional radical polymerizable functional group. At this time, the synthetic resin microporous film surface may be coated directly with the polymerizable compound. It is preferable that a coating liquid is obtained by dispersing or dissolving the polymerizable compound in a solvent, and the synthetic resin microporous film surface is coated with this coating liquid. As such, when the polymerizable compound is used as a coating liquid, the polymerizable compound can be uniformly attached to the synthetic resin microporous film surface. Thereby, the coating layer is uniformly formed, and thus a heat-resistant synthetic resin microporous film having enhanced heat resistance can be produced. Furthermore, as the polymerizable compound is used as a coating liquid, blocking of the micropores in the synthetic resin microporous film by the polymerizable compound can be reduced. Accordingly, heat resistance of the heat-resistant synthetic resin microporous film can be enhanced without causing deterioration of gas permeability.
The solvent used in the coating liquid is not particularly limited as long as the solvent can dissolve or disperse the polymerizable compound, and examples thereof include alcohols such as methanol, ethanol, propanol, and isopropyl alcohol; ketones such as acetone, methyl ethyl ketone, and methyl isobutyl ketone; ethers such as tetrahydrofuran and dioxane; ethyl acetate, and chloroform. Among them, ethyl acetate, ethanol, methanol, and acetone are preferred. These solvents can be efficiently removed after the synthetic resin microporous film surface is coated with the coating liquid. Furthermore, the solvents described above are less reactive with the liquid electrolytes that constitute secondary batteries such as lithium ion secondary batteries, and also have excellent safety.
The content of the polymerizable compound in the coating liquid is preferably 3% by weight to 20% by weight, and more preferably 5% by weight to 15% by weight. When the content of the polymerizable compound is adjusted to the range described above, the coating layer can be uniformly formed without blocking the micropores at the synthetic resin microporous film surface. Accordingly, a heat-resistant synthetic resin microporous film having enhanced heat resistance can be produced without causing deterioration of gas permeability.
There are no particular limitations on the method for coating the synthetic resin microporous film surface with the polymerizable compound, and examples thereof include:

(1) a method of applying the polymerizable compound on the synthetic resin microporous film surface; (2) a method of coating the synthetic resin microporous film surface with the polymerizable compound by immersing the synthetic resin microporous film in the polymerizable compound; (3) a method of producing a coating liquid by dissolving or dispersing the polymerizable compound in a solvent, applying this coating liquid on the surface of the synthetic resin microporous film, and then removing the solvent by heating the synthetic resin microporous film; and (4) a method of producing a coating liquid by dissolving or dispersing the polymerizable compound in a solvent, coating the synthetic resin microporous film with this coating liquid by immersing the synthetic resin microporous film in the coating liquid, and then removing the solvent by heating the synthetic resin microporous film. Among them, the methods (3) and (4) are preferred. According to these methods, the synthetic resin microporous film surface can be uniformly coated with a radical polymerizable monomer.

In the methods (3) and (4), the heating temperature for the synthetic resin microporous film for removing the solvent can be set depending on the kind or the boiling point of the solvent used. The heating temperature for the synthetic resin microporous film for removing the solvent is preferably 50°C to 140°C, and more preferably 70°C to 130°C. When the heating temperature is adjusted to the range described above, the coating solvent can be efficiently removed while thermal contraction of the synthetic resin microporous film or blocking of the micropores is reduced.
In regard to the methods (3) and (4), the heating time for the synthetic resin microporous film for removing the solvent is not particularly limited, and can be set depending on the kind or the boiling point of the solvent used. The heating time for the synthetic resin microporous film for removing the solvent is preferably 0.02 minutes to 60 minutes, and more preferably 0.1 minutes to 30 minutes.

As described above, when the synthetic resin microporous film surface is coated with the polymerizable compound or the coating liquid, the polymerizable compound can be attached to the synthetic resin microporous film surface.

(Irradiation step)

Next, the synthetic resin microporous film coated with the polymerizable compound is irradiated with active energy radiation. Thereby, the polymerizable compound is polymerized, and thus a coating layer containing a polymer of the polymerizable compound can be integrally formed on at least a portion of the surface, and preferably over the entire surface, of the synthetic resin microporous film.

The coating layer contains, as described above, a polymer of the polymerizable compound having a bifunctional or higher-functional radical polymerizable functional group. A coating layer containing such a polymer has high hardness, and thereby, thermal contraction of the heat-resistant synthetic resin microporous film at a high temperature is reduced, while heat resistance can be enhanced.

Furthermore, there is a possibility that by irradiating with active energy radiation, a portion of the synthetic resin included in the synthetic resin microporous film may be decomposed, and the mechanical strength such as tear strength of the synthetic resin microporous film may be decreased. However, a coating layer containing a polymer of a polymerizable compound having a bifunctional or higher-functional radical polymerizable functional group has high hardness as well as adequate elasticity and ductility. Accordingly, a decrease in the mechanical strength of the synthetic resin microporous film can be compensated for due to adequate elasticity and ductility of the coating layer, and thereby a decrease in the mechanical strength of the heat-resistant synthetic resin microporous film can be significantly reduced, while heat resistance can be enhanced.

Furthermore, since the polymerizable compound having a bifunctional or higher-functional radical polymerizable functional group has excellent adaptability to the synthetic resin microporous film, the synthetic resin microporous film can be coated with the polymerizable compound without blocking the micropores. Thereby, a coating layer having through-holes that penetrate in the thickness direction can be formed at the sites corresponding to the micropores of the synthetic resin microporous film. Therefore, when such a coating layer is used, a heat-resistant synthetic resin microporous film having enhanced heat resistance can be provided without causing deterioration of gas permeability.

There are no particular limitations on the active energy radiation, and examples thereof include an electron beam, plasma, ultraviolet radiation, $\alpha$-radiation, $\beta$-radiation, and $\gamma$-radiation.

In the case of using an electron beam as the active energy radiation, the accelerating voltage of the electron beam for the synthetic resin microporous film is not particularly limited; however, the accelerating voltage is preferably 50 kV to 300 kV, and more preferably 100 kV to 250 kV. When the accelerating voltage of the electron beam is adjusted to the range described above, a coating layer can be formed while deterioration of the synthetic resin in the synthetic resin microporous film is reduced.

In the case of using an electron beam as the active energy radiation, the amount of irradiation of the electron beam for the synthetic resin microporous film is not particularly limited; however, the amount of irradiation is preferably 10 kGy to 150 kGy, and more preferably 10 kGy to 100 kGy. When the amount of irradiation of the electron beam is adjusted to the range described above, a coating layer can be formed while deterioration of the synthetic resin in the synthetic resin microporous film is reduced.

In the case of using plasma as the active energy radiation, the energy density of the plasma for the synthetic resin microporous film is not particularly limited; however, the energy density is preferably 5 J/cm$^2$ to 50 J/cm$^2$, more preferably 5 J/cm$^2$ to 48 J/cm$^2$, and particularly preferably 10 J/cm$^2$ to 45 J/cm$^2$.

In the case of using ultraviolet radiation as the active energy radiation, the cumulative amount of radiation of ultraviolet radiation for the synthetic resin microporous film is preferably 1,000 mJ/cm$^2$ to 5,000 mJ/cm$^2$, more preferably 1,000 mJ/cm$^2$ to 4,000 mJ/cm$^2$, and particularly preferably 1,500 mJ/cm$^2$ to 3,700 mJ/cm$^2$. Meanwhile, when ultraviolet radiation is used as the active energy radiation, it is preferable that the coating liquid contains a photopolymerization initiator. Examples of the photopolymerization initiator include benzophenone, benzil, methyl-o-benzoyl benzoate, and anthraquinone.

The active energy radiation is preferably ultraviolet radiation, an electron beam, or plasma, and an electron beam is particularly preferred. When an electron beam is used, since the electron beam has appropriately high energy, a sufficient amount of radicals are generated from the synthetic resin in the synthetic resin microporous film by irradiation of an electron beam, and chemical bonds between a portion of the synthetic resin and a portion of the polymer of the polymerizable compound can be formed to a large extent.

[Heat-resistant synthetic resin microporous film]

In the heat-resistant synthetic resin microporous film of the invention, the coating layer is laminated and integrated to the synthetic resin microporous film surface. When a polymerizable compound having a bifunctional or higher-functional radical polymerizable functional group is used, as described above, a coating layer having through-holes that penetrate in the thickness direction at the sites corresponding to the micropores of the synthetic resin microporous film can be formed. Thereby, blocking of the micropores of the synthetic resin microporous film caused by formation of the coating layer can be reduced.

The surface aperture ratio of the heat-resistant synthetic resin microporous film is not particularly limited; however, the surface aperture ratio is preferably 30% to 55%, and more preferably 30% to 50%. As described above, blocking of the micropores of the synthetic resin microporous film is reduced by formation of the coating layer, and thereby the surface aperture ratio of the heat-resistant synthetic resin microporous film can be adjusted to the range described above. A heat-resistant synthetic resin microporous film having the surface aperture ratio in the range described above has both excellent mechanical strength and excellent ion permeability. Meanwhile, the surface aperture ratio of the heat-resistant synthetic resin microporous film can be measured by the same method as the method for measuring the surface aperture ratio of a synthetic resin microporous film described above.

The gas permeability of the heat-resistant synthetic resin microporous film is not particularly limited; however, the gas permeability is preferably 50 sec/100 mL to 600 sec/100 mL, and more preferably 100 sec/100 mL to 300 sec/100 mL. In the heat-resistant synthetic resin microporous film of the invention, as described above, deterioration of gas permeability caused by formation of the coating layer is reduced. Therefore, the gas permeability of the heat-resistant synthetic resin microporous film of the invention can be adjusted to the range described above. Meanwhile, the gas permeability of the heat-resistant synthetic resin microporous film can be measured by the same method as the method for measuring gas permeability of a synthetic resin microporous film described above.

The maximum thermal shrinkage of the heat-resistant synthetic resin microporous film obtainable when the heat-resistant synthetic resin microporous film is heated from 25°C to 180°C at a rate of temperature increase of 5°C/min is not particularly limited; however, the maximum thermal shrinkage is preferably 20% or less, more preferably 5% to 20%, and particularly preferably 8% to 17%. The heat-resistant synthetic resin microporous film has reduced thermal shrinkage at a high temperature by virtue of the coating layer, and has excellent heat resistance. Therefore, the heat-resistant synthetic resin microporous film can have the maximum thermal shrinkage adjusted to 20% or less.

Meanwhile, the measurement of the maximum thermal shrinkage of the heat-resistant synthetic resin microporous film can be carried out as follows. First, a planar rectangular-shaped specimen that measures 3 mm in width x 30 mm in length is cut out from the heat-resistant synthetic resin microporous film. At this time, the length direction (extrusion direction) of the heat-resistant synthetic resin microporous film is arranged to be parallel to the length direction of the specimen. Two ends in the length direction of the specimen are gripped with grippers, and the specimen is mounted on a TMA analyzer (for example, trade name: "TMA-SS6000" manufactured by Seiko Instruments, Inc.). At this time, the distance between the grippers is set to 10 mm, and the grippers are made movable along with thermal contraction of the specimen. Then, while a tension of 19.6 mN (2 gf) is applied to the specimen in the length direction, the specimen is heated from 25°C to 180°C at a rate of temperature increase of 5°C/min, and the distance between the grippers is measured at various temperatures. The thermal shrinkage is calculated from the shortest distance $L_{max}$ (mm) of the distance between the grippers, based on the following formula:

$$\text{Thermal shrinkage (\%)} = 100 \times (10 - L_{max})/10$$

The piercing strength of the heat-resistant synthetic resin microporous film is preferably 0.7 N or more, more preferably 0.8 N or more, and particularly preferably 1.0 N or more. The upper limit of the piercing strength of the heat-resistant synthetic resin microporous film is not particularly limited; however, the upper limit is preferably 3.0 N or less, more preferably 2.5 N or less, and particularly preferably 2.0 N or less. The heat-resistant synthetic resin microporous film can be imparted with heat resistance while a decrease in the mechanical strength is significantly reduced by the coating layer. Therefore, the heat-resistant synthetic resin microporous film has excellent mechanical strength, and the piercing strength can be adjusted to 0.7 M or more. Such a heat-resistant synthetic resin microporous film is not easily torn off by dendrites, and the generation of minute internal short circuits (dendrite shorts) caused by dendrites (dendritic crystals) can be reduced. Furthermore, the heat-resistant synthetic resin microporous film is not susceptible to breakage or splitting at the time of production of a separator or at the time of battery assembly.

Meanwhile, according to the invention, the piercing strength of the heat-resistant synthetic resin microporous film can be measured in conformity to JIS Z1707 (1998). Specifically, a needle having a diameter of 1.0 mm and having a semicircular-shaped tip having a radius of 0.5 mm is stuck into the heat-resistant synthetic resin microporous film at a rate of 50 mm/min, and the maximum stress obtained before the needle penetrates thereinto is designated as the piercing strength.

The gel fraction of the heat-resistant synthetic resin microporous film is preferably 5% by weight or more, more preferably 10% by weight or more, and particularly preferably 30% by weight or more. When the gel fraction is adjusted to 5% by weight or more, the coating layer containing a polymerizable compound having a bifunctional or higher-functional radical polymerizable functional group is firmly formed, and thereby, thermal shrinkage of the heat-resistant synthetic microporous film can be reduced. Furthermore, the gel fraction of the heat-resistant synthetic resin microporous film is preferably 99% by weight or less, and more preferably 60% by weight or less. When the gel fraction is adjusted to 99% by weight or less, a decrease in the mechanical strength of the heat-resistant synthetic resin microporous film can be reduced.

According to the invention, measurement of the gel fraction of a heat-resistant synthetic resin microporous film can be carried out by the following procedure. First, the heat-resistant synthetic resin microporous film is cut out, and thus about 0.1 g of a specimen is obtained. After the weight of this specimen [$W_1$ (g)] is measured, the specimen is placed in a test tube. Next, 20 mL of xylene is poured into the test tube, and the entire specimen is immersed in xylene. The test tube is covered with a lid made of aluminum, and the test tube is immersed for 24 hours in an oil bath heated to 130°C. The content in the test tube taken out from the oil bath is rapidly poured into a stainless steel mesh basket (#200) before the temperature decreases, and insoluble matter is filtered. Meanwhile, the weight of the mesh basket [$W_0$ (g)] is measured in advance. The mesh basket and the filtered matter are dried under reduced pressure for 7 hours at 80°C, and then the weight of the mesh basket and the filtered matter [$W_2$ (g)] is weighed. Then, the gel fraction is calculated by the following formula:

$$\texttt{Gel fraction [wt\%]} = 100 \times (W_2 - W_0)/W_1$$

The heat-resistant synthetic resin microporous film of the invention is suitably used as a separator for a non-aqueous liquid electrolyte secondary battery. Examples of the non-aqueous liquid electrolyte secondary battery include a lithium ion secondary battery. Since the heat-resistant synthetic resin microporous film of the invention has excellent heat resistance, when such a heat-resistant synthetic resin microporous film is used as a separator, a non-aqueous liquid electrolyte secondary battery, in which electrical short circuiting between electrodes is suppressed even if the interior of the battery reaches a high temperature, can be provided.

A non-aqueous liquid electrolyte is a liquid electrolyte obtained by dissolving an electrolyte salt in a solvent which does not include water. An example of the non-aqueous liquid electrolyte used in a lithium ion secondary battery is a non-aqueous liquid electrolyte obtained by dissolving a lithium salt in an aprotic organic solvent. Examples of the aprotic organic solvent include mixed solvents of cyclic carbonates such as propylene carbonate and ethylene carbonate, and chain-like carbonates such as diethyl carbonate, methyl ethyl carbonate and dimethyl carbonate. Also, examples of the lithium salt include $LiPF_6$, $LiBF_4$, $LiClO_4$, and $LiN(SO_2CF_3)_2$. Advantageous Effects of Invention

According to the invention, when a coating layer containing a polymer of a polymerizable compound having a bifunctional or higher-functional radical polymerizable functional group is used, a heat-resistant synthetic resin microporous film having enhanced heat resistance while having reduced deterioration of mechanical strength can be provided.

Description of Embodiments

Hereinafter, the invention is explained more specifically using Examples; however, the invention is not intended to be limited to these Examples.

Examples

[Example 1]

1. Production of homopolypropylene microporous film

(Extrusion step)

A homopolypropylene (weight average molecular weight 413,000, molecular weight distribution 9.3, melting point 163°C, heat of fusion 96 mJ/mg) was supplied to an extruder and was melt kneaded at a resin temperature of 200°C. The homopolypropylene was extruded into a film form through a T-die installed at the tip of the extruder, and was cooled until the surface temperature reached 30°C. Thus, a homopolypropylene film (thickness 30 μm) was obtained. Meanwhile, the amount of extrusion was 9 kg/hour, the film forming speed was 22 m/min, and the draw ratio was 83.

(Aging step)

The homopolypropylene film thus obtained was aged by leaving the film to stand for 24 hours in an air heating furnace at an ambient temperature of 150°C.

(First stretching step)

The aged homopolypropylene film was uniaxially stretched in the extrusion direction only using a uniaxial stretching apparatus, at a stretch ratio of 1.2 times at a stretching speed of 50%/min under the condition of a surface temperature of 23°C.

(Second stretching step)

Subsequently, the homopolypropylene film was uniaxially stretched in the extrusion direction only using a uniaxial stretching apparatus, at a stretch ratio of 2 times at a stretching speed of 42%/min under the condition of a surface temperature of 120°C.

(Annealing step)

Thereafter, the homopolypropylene film was heated over 10 minutes such that the surface temperature reached 130°C, and no tension was applied to the homopolypropylene film. The homopolypropylene film was subjected to annealing, and thus a homopolypropylene microporous film (thickness 25 $\mu$m) was obtained. Meanwhile, the shrinkage of the homopolypropylene film at the time of annealing was adjusted to 20%.
The homopolypropylene microporous film thus obtained had gas permeability of 110 sec/100 mL, a surface aperture ratio of 40%, a maximum major axis of the opening end of a micropore of 600 nm, an average major axis of the opening ends of the micropores of 360 nm, and a pore density of 30 pores/$\mu$m$^2$.

2. Formation of coating layer

(Coating step)

A coating liquid containing 90% by weight of ethyl acetate as a solvent and 10% by weight of an ethylene oxide modification product of trimethylolpropane tri(meth)acrylate (number of radical polymerizable functional groups in one molecule: 3, average number of added moles of ethylene oxide: 3.5 moles, trade name: "VISCOAT #360" manufactured by Osaka Organic Chemical Industry, Ltd.) as a polymerizable compound, was prepared. Subsequently, the homopolypropylene microporous film surface was coated with the coating liquid, and then the homopolypropylene microporous film was heated for 2 minutes at 80°C to remove the solvent. Thereby, the polymerizable compound was attached over the entire surface of the homopolypropylene microporous film.

(Irradiation step)

Next, the homopolypropylene microporous film was irradiated with an electron beam at an accelerating voltage of 200 kV and an amount of irradiation of 35 kGy in a nitrogen atmosphere, and thus the polymerizable compound was polymerized. Thereby, a heat-resistant homopolypropylene microporous film in which a coating layer containing a polymer of a radical polymerizable monomer is formed on the surface of the homopolypropylene microporous film and on the wall surface of the opening ends of micropores extending to the film surface, was obtained.

[Example 2]

A heat-resistant homopolypropylene microporous film was produced in the same manner as in Example 1, except that a coating liquid containing 90% by weight of ethyl acetate as a solvent and 10% by weight of a dendritic polymer having bifunctional or higher-functional (meth)acryloyl groups (weight average molecular weight: 2,000, trade name: "VISCOAT #1000" manufactured by Osaka Organic Chemical Industry, Ltd.) as a polymerizable compound, was used.

[Example 3]

A heat-resistant homopolypropylene microporous film was produced in the same manner as in Example 1, except that a coating liquid containing 90% by weight of ethyl acetate as a solvent and 10% by weight of a dendritic polymer having bifunctional or higher-functional (meth)acryloyl groups (weight average molecular weight: 20,000, trade name: "SUBARU-501" manufactured by Osaka Organic Chemical Industry, Ltd.) as a polymerizable compound, was used.

[Example 4]

A heat-resistant homopolypropylene microporous film was produced in the same manner as in Example 1, except that a coating liquid containing 90% by weight of ethyl acetate as a solvent and 10% by weight of an ethylene oxide modification product of pentaerythritol tetraacrylate (number of radical polymerizable functional groups in one molecule: 4, average number of added moles of ethylene oxide: 4 moles, manufactured by Miwon Specialty Chemical Co., Ltd., trade name: "MIRAMER M4004") as a polymerizable compound, was used.

[Example 5]

A heat-resistant homopolypropylene microporous film was produced in the same manner as in Example 1, except that a coating liquid containing 90% by weight of ethyl acetate as a solvent and 10% by weight of an ethylene oxide modification product of trimethylolpropane triacrylate (number of radical polymerizable functional groups in one molecule: 3, average number of added moles of ethylene oxide: 6 moles, manufactured by Miwon Specialty Chemical Co., Ltd., trade name: "MIRAMER M3160") as a polymerizable compound, was used.

[Example 6]

A heat-resistant homopolypropylene microporous film was produced in the same manner as in Example 1, except that a coating liquid containing 90% by weight of ethyl acetate as a solvent and 10% by weight of an ethylene oxide modification product of trimethylolpropane triacrylate (number of radical polymerizable functional groups in one molecule: 3, average number of added moles of ethylene oxide: 9 moles, manufactured by Miwon Specialty Chemical Co., Ltd., trade name: "MIRAMER M3190",) as a polymerizable compound, was used.

[Example 7]

A heat-resistant homopolypropylene microporous film was produced in the same manner as in Example 1, except that a coating liquid containing 90% by weight of ethyl acetate as a solvent and 10% by weight of a propylene oxide modification product of trimethylolpropane triacrylate (number of radical polymerizable functional groups in one molecule: 3, average number of added moles of propylene oxide: 3 moles, trade name: "SR492" manufactured by Sartomer Company, Inc.) as a polymerizable compound, was used.

[Example 8]

A heat-resistant homopolypropylene microporous film was produced in the same manner as in Example 1, except that a coating liquid containing 90% by weight of ethyl acetate as a solvent and 10% by weight of a propylene oxide modification product of trimethylolpropane triacrylate (number of radical polymerizable functional groups in one molecule: 3, average number of added moles of propylene oxide: 6 moles, trade name: "SR501" manufactured by Sartomer Company, Inc.) as a polymerizable compound, was used.

[Example 9]

A heat-resistant homopolypropylene microporous film was produced in the same manner as in Example 1, except that a coating liquid containing 90% by weight of ethyl acetate as a solvent and 10% by weight of an ethylene oxide modification product of glyceryl triacrylate (number of radical polymerizable functional groups in one molecule: 3, average number of added moles of ethylene oxide: 3 moles, trade name: "A-GYL-3E" manufactured by Shin Nakamura Chemical Co., Ltd.) as a polymerizable compound, was used.

[Example 10]

A heat-resistant homopolypropylene microporous film was produced in the same manner as in Example 1, except that a coating liquid containing 90% by weight of ethyl acetate as a solvent and 10% by weight of an isopropylene oxide modification product of dipentaerythritol hexaacrylate (number of radical polymerizable functional groups in one molecule: 6, average number of added moles of isopropylene oxide: 6 moles, trade name: "A-DPH-6P" manufactured by Shin Nakamura Chemical Co., Ltd.) as a polymerizable compound, was used.

[Comparative Example 1]

A heat-resistant homopolypropylene microporous film was produced in the same manner as in Example 1, except that a coating liquid containing 90% by weight of ethyl acetate as a solvent, and 3.8% by weight of pentaerythritol tetrakis(3-mercaptobutyrate) [KARENZ MT (registered trademark) PE-1] and 6.2% by weight of triallyl isocyanurate (TAIC) as polymerizable compounds, was used.

[Evaluation]

For the heat-resistant homopolypropylene microporous films produced in Examples and Comparative Examples, the surface aperture ratio, the gas permeability, the maximum thermal shrinkage obtained when a film was heated from 25°C to 180°C at a rate of temperature increase of 5°C/min, the piercing strength, and the gel fraction were measured by the methods described above, and the results are presented in Table 1. The content of the coating layer in a heat-resistant homopolypropylene microporous film with respect to 100 parts by weight of the homopolypropylene microporous film is presented in Table 1.

[Table 1]

| | | Example 1 | Example 2 | Example 3 | Example 4 | Example 5 | Example 6 | Example 7 | Example 8 | Example 9 | Example 10 | Comparative Example 1 |
|---|---|---|---|---|---|---|---|---|---|---|---|---|
| Blend of coating liquid (wt%) | Ethyl acetate | 90 | 90 | 90 | 90 | 90 | 90 | 90 | 90 | 90 | 90 | 90 |
| | VISCOAT #360 | 10 | 0 | 0 | 0 | 0 | 0 | 0 | 0 | 0 | 0 | 0 |
| | VISCOAT #1000 | 0 | 10 | 0 | 0 | 0 | 0 | 0 | 0 | 0 | 0 | 0 |
| | SUBARU-501 | 0 | 0 | 10 | 0 | 0 | 0 | 0 | 0 | 0 | 0 | 0 |
| | Miramer M4004 | 0 | 0 | 0 | 10 | 0 | 0 | 0 | 0 | 0 | 0 | 0 |
| | Miramer M3160 | 0 | 0 | 0 | 0 | 10 | 0 | 0 | 0 | 0 | 0 | 0 |
| | Miramer M3190 | 0 | 0 | 0 | 0 | 0 | 10 | 0 | 0 | 0 | 0 | 0 |
| | SR492 | 0 | 0 | 0 | 0 | 0 | 0 | 10 | 0 | 0 | 0 | 0 |
| | SR501 | 0 | 0 | 0 | 0 | 0 | 0 | 0 | 10 | 0 | 0 | 0 |
| | A-GYL-3E | 0 | 0 | 0 | 0 | 0 | 0 | 0 | 0 | 10 | 0 | 0 |
| | A-DPH-6P | 0 | 0 | 0 | 0 | 0 | 0 | 0 | 0 | 0 | 10 | 0 |
| | KARENZ MT PE-I | 0 | 0 | 0 | 0 | 0 | 0 | 0 | 0 | 0 | 0 | 3.8 |
| | TAIC | 0 | 0 | 0 | 0 | 0 | 0 | 0 | 0 | 0 | 0 | 6.2 |
| Heat-resistant homopolypropylene microporous film | Content of coating layer [parts by weight] | 35 | 36 | 34 | 35 | 34 | 33 | 34 | 35 | 36 | 35 | 34 |
| | Surface aperture ratio [%] | 38 | 39 | 38 | 37 | 38 | 39 | 38 | 39 | 38 | 38 | 39 |
| | Gas permeability [sec/100 mL] | 120 | 125 | 120 | 120 | 115 | 110 | 120 | 125 | 125 | 120 | 115 |
| | Maximum thermal shrinkage [%] | 15 | 17 | 17 | 14 | 19 | 20 | 18 | 20 | 15 | 13 | 36 |

E P 3 121 872 A1

(continued)

|  | Example 1 | Example 2 | Example 3 | Example 4 | Example 5 | Example 6 | Example 7 | Example 8 | Example 9 | Example 10 | Comparative Example 1 |
|---|---|---|---|---|---|---|---|---|---|---|---|
| Piercing strength [N] | 1.0 | 1.1 | 1.0 | 1.1 | 1.0 | 1.2 | 1.0 | 1.1 | 0.9 | 0.7 | 1.4 |
| Gel fraction [wt%] | 30 | 32 | 31 | 30 | 30 | 32 | 30 | 31 | 31 | 33 | 17 |

**EP 3 121 872 A1**

(Cross-Reference to Related Applications)

This application is based upon and claims the benefit of priority from Japanese Patent Application No. 2014-55478, filed on March 18, 2014, the entire contents of which are incorporated herein by reference.

Industrial Applicability

The heat-resistant synthetic resin microporous film of the invention has enhanced heat resistance while having reduced deterioration of mechanical strength, and thus the heat-resistant synthetic resin microporous film can be suitably used as a separator for a non-aqueous liquid electrolyte secondary battery.

**Claims**

1. A heat-resistant synthetic resin microporous film comprising:

   a synthetic resin microporous film containing a synthetic resin; and
   a coating layer formed on at least a portion of the surface of the synthetic resin microporous film and containing a polymer of a polymerizable compound having a bifunctional or higher-functional radical polymerizable functional group,
   the heat-resistant synthetic resin microporous film having a surface aperture ratio of 30% to 55%; gas permeability of 50 sec/100 mL to 600 sec/100 mL; a maximum thermal shrinkage obtainable when the film is heated from 25°C to 180°C at a rate of temperature increase of 5°C/min, of 20% or less; and a piercing strength of 0.7 N or more.

2. The heat-resistant synthetic resin microporous film according to claim 1, wherein the piercing strength is 1.0 N or more.

3. The heat-resistant synthetic resin microporous film according to claim 1 or 2, wherein the polymerizable compound is at least one selected from the group consisting of a polyfunctional (meth)acrylate modification product, a dendritic polymer having bifunctional or higher-functional (meth)acryloyl groups, and a urethane (meth)acrylate oligomer having a bifunctional or higher-functional (meth)acryloyl group.

4. A heat-resistant synthetic resin microporous film comprising:

   a synthetic resin microporous film containing a synthetic resin; and
   a coating layer formed on at least a portion of the surface of the synthetic resin microporous film and containing a polymer of a polymerizable compound having a bifunctional or higher-functional radical polymerizable functional group, the polymerizable compound being at least one selected from the group consisting of a polyfunctional (meth)acrylate modification product, a dendritic polymer having bifunctional or higher-functional (meth)acryloyl groups, and a urethane (meth)acrylate oligomer having a bifunctional or higher-functional (meth)acryloyl group,
   the heat-resistant synthetic resin microporous film having a surface aperture ratio of 30% to 55%; gas permeability of 50 sec/100 mL to 600 sec/100 mL; and a maximum thermal shrinkage obtainable when the film is heated from 25°C to 180°C at a rate of temperature increase of 5°C/min, of 20% or less.

5. The heat-resistant synthetic resin microporous film according to any one of claims 1 to 4, wherein the coating layer contains a polymer obtained by polymerizing the polymerizable compound having a bifunctional or higher-functional radical polymerizable functional group by irradiation of active energy radiation.

6. The heat-resistant synthetic resin microporous film according to any one of claims 1 to 5, wherein the gel fraction is 5% by weight or more.

7. The heat-resistant synthetic resin microporous film according to any one of claims 1 to 6, wherein the synthetic resin includes a propylene-based resin.

8. A separator for a non-aqueous liquid electrolyte secondary battery, comprising the heat-resistant synthetic resin microporous film according to any one of claims 1 to 7.

23

9. A non-aqueous liquid electrolyte secondary battery comprising the separator for a non-aqueous liquid electrolyte secondary battery according to claim 8.

10. A method for producing a heat-resistant synthetic resin microporous film, the method comprising coating at least a portion of the surface of a synthetic resin microporous film containing a synthetic resin with a polymerizable compound having a bifunctional or higher-functional radical polymerizable functional group, and then irradiating the synthetic resin microporous film with active energy radiation.

11. The method for producing a heat-resistant synthetic resin microporous film according to claim 10, wherein the polymerizable compound is at least one selected from the group consisting of a polyfunctional (meth)acrylate modification product, a dendritic polymer having a bifunctional or higher-functional (meth)acryloyl group, and a urethane (meth)acrylate oligomer having a bifunctional or higher-functional (meth)acryloyl group.

## INTERNATIONAL SEARCH REPORT

| International application No. |
| --- |
| PCT/JP2015/056473 |

| A. CLASSIFICATION OF SUBJECT MATTER |
| --- |
| H01M2/16(2006.01)i, B32B5/18(2006.01)i, B32B27/30(2006.01)i, C08J9/00 (2006.01)i |

According to International Patent Classification (IPC) or to both national classification and IPC

| B. FIELDS SEARCHED |
| --- |
| Minimum documentation searched (classification system followed by classification symbols) H01M2/16, B32B5/18, B32B27/30, C08J9/00 |

Documentation searched other than minimum documentation to the extent that such documents are included in the fields searched

| Jitsuyo Shinan Koho | 1922–1996 | Jitsuyo Shinan Toroku Koho | 1996–2015 |
| --- | --- | --- | --- |
| Kokai Jitsuyo Shinan Koho | 1971–2015 | Toroku Jitsuyo Shinan Koho | 1994–2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 11-106552 A (Tonen Chemical Corp.), 20 April 1999 (20.04.1999), entire text (Family: none) | 1-11 |
| A | JP 2003-059480 A (Yuasa Corp.), 28 February 2003 (28.02.2003), entire text; all drawings (Family: none) | 1-11 |
| A | JP 2001-151834 A (Toshiba Corp.), 05 June 2001 (05.06.2001), entire text; all drawings & US 6565763 B1 | 1-11 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 01 June 2015 (01.06.15) | Date of mailing of the international search report 09 June 2015 (09.06.15) |
| --- | --- |
| Name and mailing address of the ISA/ Japan Patent Office 3-4-3,Kasumigaseki,Chiyoda-ku, Tokyo 100-8915,Japan | Authorized officer  Telephone No. |

Form PCT/ISA/210 (second sheet) (July 2009)

**INTERNATIONAL SEARCH REPORT**

International application No.

PCT/JP2015/056473

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-179278 A  (Nitto Denko Corp.),<br>06 July 2006 (06.07.2006),<br>entire text; all drawings<br>(Family: none) | 1-11 |

Form PCT/ISA/210 (continuation of second sheet) (July 2009)

**REFERENCES CITED IN THE DESCRIPTION**

**Patent documents cited in the description**

- JP 2003022793 A
- JP 100 A
- JP 200 A
- JP 2014055478 A